Europäisches Patentamt

European Patent Office

Office européen des brevets

(19)

(11) Publication number: **0 031 669**
**B1**

# EUROPEAN PATENT SPECIFICATION

(12)

(45) Date of publication of patent specification: **19.09.84**

(51) Int. Cl.³: **G 21 C 13/04**

(21) Application number: **80304540.0**

(22) Date of filing: **16.12.80**

(54) Nozzle penetration arrangements for nuclear reactor pressure vessel closures.

(30) Priority: **22.12.79 DE 2952025**

(43) Date of publication of application:
**08.07.81 Bulletin 81/27**

(45) Publication of the grant of the patent:
**19.09.84 Bulletin 84/38**

(84) Designated Contracting States:
**CH FR GB IT LI**

(56) References cited:
**CH-A- 383 706**
**DE-A-1 903 662**
**DE-A-2 825 934**
**FR-A-1 244 114**
**FR-A-1 464 211**
**FR-A-1 508 571**
**FR-A-2 069 737**
**US-A-3 262 719**

(73) Proprietor: **BROWN BOVERI REAKTOR GmbH**
**Dudenstrasse 44**
**D-6800 Mannheim 1 (DE)**

(72) Inventor: **Dronkers, Peter**
**Goethestrasse 8**
**D-6800 Mannheim 1 (DE)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to nozzle penetration arrangements for nuclear reactor pressure vessel closures.

Swiss Patent CH—A—383 706 discloses such an arrangement in which a nozzle which is of a different material than the closure is joined to the closure in a friction or tension coupling, and in which the nozzle is joined to an austenitic plating on the inside of the closure by a weld seam seal. The nozzle, which is of an austenitic material, is screwed into a ferritic portion of the closure. This friction or tension coupling is subject to great stress during temperature changes, due to the different coefficients of thermal expansion. A groove provided in the region of the weld joint provides no compensation for the stresses on the screw coupling, since the differences in stress are present in this region also. There is no possibility of influencing the stresses with this design, nor of providing, for example, a desired prestressing in the region of the friction or tension coupling.

According to the present invention there is provided a nozzle penetration arrangement for a nuclear reactor pressure vessel closure, in which a nozzle which is of a different material than the closure is joined to the closure in a friction or tension coupling, and in which the nozzle is joined to an austenitic plating on the inside of the closure by a weld seam seal, characterised in that a compensating ring is provided between a shoulder of the nozzle and a contact surface of the closure, and in that the height and the material of the compensating ring are selected such that the elongation of the nozzle and closure materials due to heat expansion is compensated in the region of the distance extending from the shoulder to the friction or tension coupling.

The invention also provides a nozzle penetration arrangement for a nuclear reactor pressure vessel closure, in which a nozzle which is of a different material than the closure is joined to the closure in a friction or tension coupling, and in which the nozzle is joined to an austenitic plating on the inside of the closure by a weld seam seal, characterised in that a compensating ring is provided between a shoulder of the nozzle and a contact surface of the closure, and in that the height and the material of the compensating ring are selected in such a way that a predictable difference in stress is created in the region of the friction or tension coupling upon heating.

The compensating ring, depending on its composition and height, permits influencing and variation of stresses in the friction or tension coupling area, enabling complete equalization of the stress or the setting-up of a predictable difference of stress to be achieved.

The invention will now be further described, by way of illustrative and non-limiting example, with reference to the accompanying schematic drawings, in which:

Figure 1 is a partial sectional view of a first embodiment of the invention; and

Figure 2 is a like view of a second embodiment of the invention.

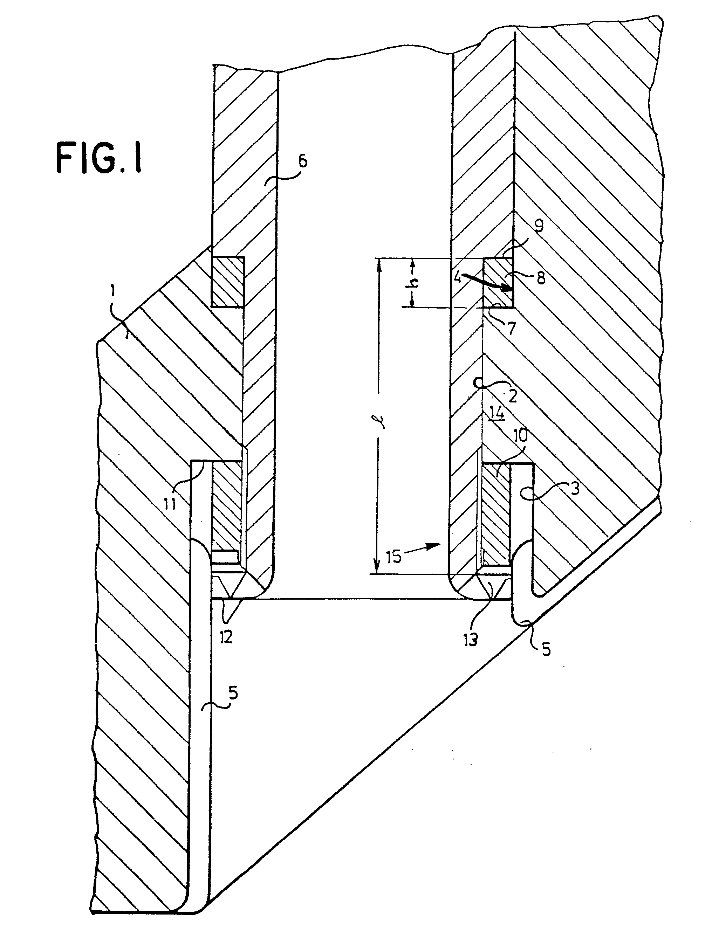

Figure 1 is a partial sectional view of a closure 1 of a nuclear reactor pressure vessel (not shown). The closure 1 is provided with a through-hole 2 having steps or counterbores 3, 4 at its opposite ends. The closure 1 is of a ferritic material having a coefficient of thermal expansion of $13.10^{-16}$ and is provided on its inner side with a plating 5 of an austenitic material which extends into the counterbore 3. A nozzle 6 comprising a non-ferrous base alloy of DIN designation Ni Cr 15 Fe having a coefficient of thermal expansion of $14.10^{-6}$ is inserted into the through-hole 2 and an end of the nozzle 6 provided with an external thread projects into the counterbore 3. A compensating ring 8 of an austenitic material having a coefficient of thermal expansion of $17.10^{-6}$ is placed on a contact surface or shoulder 7 formed by the counterbore 4, and the nozzle 6 is braced on the ring 8 by means of a shoulder 9 thereof. The nozzle 6 is fastened in the closure 1 by virtue of a nut 10 threaded on the nozzle 6, which nut comes into contact with a surface or shoulder 11 of the counterbore 3 to form a friction or tension coupling 15 of the nozzle 6 to the closure 1. With a weld seam 12 serving only for sealing purposes, the nozzle 6 is connected to the plating 5 with the interposition of a packing ring 13.

The nut 10 is of a ferritic material which has the same coefficient of thermal expansion as the material of the closure 1. If the distance $l$ between the shoulder 9 and the tension coupling 15 amounts to 80 mm in the above-named materials, then the height $h$ of the compensating ring 8 must be 20 mm. An elongation of 0.336 mm is produced for the nozzle 6 in the region of the 80 mm long distance upon heating to approximately 300°C. This value is also obtained for the combination of the nut 10, a projection 14 constituted by the bore 2 between the surfaces 7 and 11, and the compensating ring 8. In this way, thermal stresses in the region of the tension coupling 15 are avoided.

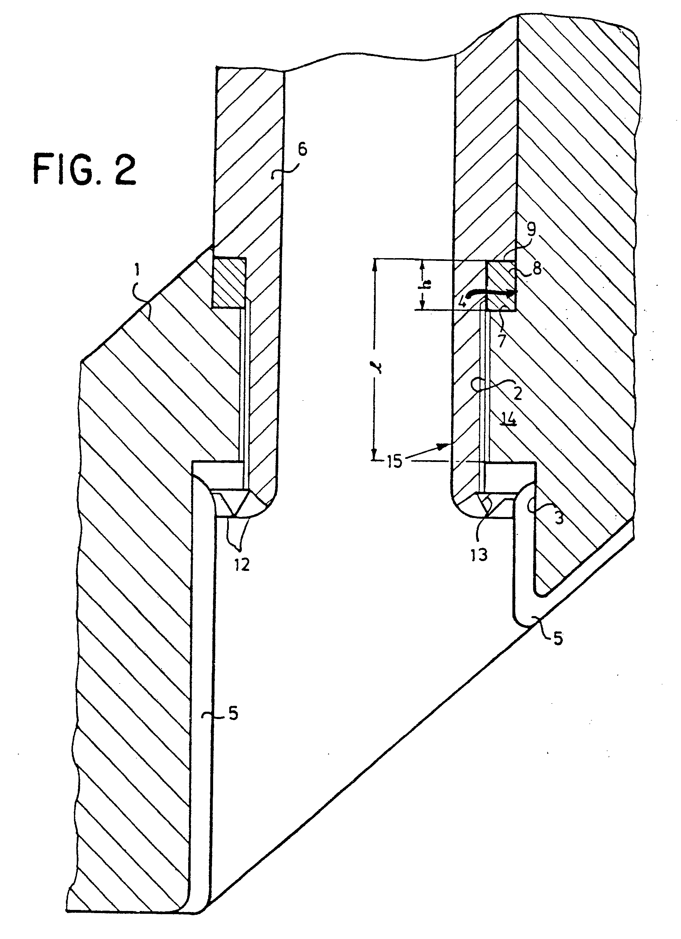

Figure 2 shows an alternative arrangement which is similar to that of Figure 1 and which will only be described in so far as it differs therefrom. In Figure 2, the nozzle 6 is screwed directly into the through-hole 2, which is provided with an internal thread. A compensating ring 8 is placed on the contact surface 7 in the same way as in Figure 1, and the nozzle 6 is braced by its shoulder 9 on the ring. In this case also, the height $h$ and the material of the compensating ring 8 are selected in such a way that the elongation of the nozzle 6 in the region of the length $l$ is equal to the elongation of the projection 14 plus the height of the compensating ring 8 upon a change in temperature.

If a specific difference in stress is desired, then this can be accomplished by changing the height $h$ or the material composition of the compensating ring 8 as appropriate.

The heat stresses in the region of the tension coupling can be successfully controlled with the above-described nozzle penetration arrangements.

### Claims

1. A nozzle penetration arrangement for a nuclear reactor pressure vessel closure (1), in which a nozzle (6) which is of a different material than the closure is joined to the closure (1) in a friction or tension coupling (15), and in which the nozzle (6) is joined to an austenitic plating (5) on the inside of the closure (1) by a weld seam seal (12), characterised in that a compensating ring (8) is provided between a shoulder (9) of the nozzle (6) and a contact surface (7) of the closure (1), and in that the height ($h$) and the material of the compensating ring (8) are selected such that the elongation of the nozzle and closure materials due to heat expansion is compensated in the region of the distance $l$ extending from the shoulder (9) to the friction or tension coupling (15).

2. A nozzle penetration arrangement for a nuclear reactor pressure vessel closure (1), in which a nozzle (6) which is of a different material than the closure is joined to the closure (1) in a friction or tension coupling (15), and in which the nozzle (6) is joined to an austenitic plating (5) on the inside of the closure (1) by a weld seam seal (12), characterised in that a compensating ring (8) is provided between a shoulder (9) of the nozzle (6) and a contact surface (7) of the closure (1), and in that the height ($h$) and the material of the compensating ring (8) are selected in such a way that a predictable difference in stress is created in the region of the friction or tension coupling (15) upon heating.

3. An arrangement according to claim 1 or claim 2, wherein the closure (1) is of a ferritic material, the nozzle (6) is of a non-ferrous base alloy of the type Ni Cr 15 Fe, and the compensating ring (8) is of an austenitic material.

### Patentansprüche

1. Stutzendurchführung für den Deckel eines Kernreaktordruckbehälters (1) bei der ein Stutzen (6), der aus einem anderen Material als der Deckel besteht, mit dem Deckel (1) über eine Reibungs- oder Spannungskupplung (15) verbunden ist, und bei der der Stutzen (6) auf der Innenseite des Deckels (1) durch eine Schweißnahtabdichtung (12) mit einer austhenitischen Innenplattierung (5) verbunden ist, dadurch gekennzeichnet, daß ein Ausgleichsring (8) zwischen einer Schulter (9) des Stutzens (6) und einer Auflagefläche (7) des Deckels (1) vorgesehen ist und daß die Höhe (h) und der Werkstoff des Ausgleichsringes (8) derart ausgewählt sind, daß die Verlängerung des Stutzen- und Deckelmaterials in Folge Wärmeausdehnung im Bereich des Abstandes 1 kompensiert wird, welches sich von der Schulter (9) zu der Reib- oder Spannungskupplung (15) erstreckt.

2. Stutzendurchführung für einen Deckel (1) eines Kernreaktordruckbehälters, bei welchem ein Stutzen (6), der aus einem anderen Material als der Deckel besteht, mit einer Reib- oder Spannungskupplung (15) mit dem Deckel (1) und bei welchem der Stutzen (6) auf der Innumseite des Deckels (1) durch eine Schweißnahtabdichtung (12) mit einer austhenitischen Plattierung (5) verbunden ist, dadurch gekennzeichnet, daß ein Ausgleichsring (8) zwischen einer Schulter (9) des Stutzens (6) und einer Auflagefläche (7) des Deckels (1) vorgesehen ist und daß die Höhe (h) und der Werkstoff des Ausgleichsringes (8) derart ausgewählt sind, daß ein vorhersagbarer Unterschied in der Beanspruchung im Bereich der Reibungs- oder Spannungskupplung (15) auf Erwärmung hin hervorgerufen wird.

3. Anordnung nach Anspruch 1 oder 2, wobei der Deckel (1) aus einem ferritischen Werkstoff, der Stutzen (6) aus einer Nichteisenbasislegierung der Art MiCr 15 Fe und der Ausgleichsring (8) aus einem austhenitischen Werkstoff bestehen.

### Revendications

1. Manchon de pénétration pour couvercle (1) de cuve sous pression de réacteur nucléaire, dans lequel un manchon (6) en un autre matériau que le couvercle est réuni au couvercle (1) en un accouplement par frottement ou par traction (15), et dans lequel le manchon (6) est réuni à un placage austénitique (5) revêtant l'intérieur du couvercle (1) par une soudure étanche (12), caractérisé en ce qu'un anneau compensateur (8) est prévu entre un épaulement (9) du manchon (6) et une surface de contact (7) du couvercle (1), et en ce que la hauteur $h$ et la matière de l'anneau compensateur sont choisies telles que l'allongement des matériaux du manchon et du couvercle dû à la dilatation thermique est compensé sur la distance $l$ allant de l'épaulement (9) à l'accouplement par frottement ou par traction (15).

2. Manchon de pénétration pour couvercle (1) de cuve sous pression de réacteur nucléaire, dans lequel un manchon (6) en un autre matériau que la couvercle est réuni au couvercle (1) en un accouplement par frottement ou par traction (15), et dans lequel le manchon est réuni à un placage austénitique (5) revêtant l'intérieur du couvercle (1) par une soudure étanche (12), caractérisé en ce qu'un anneau compensateur (8) est prévu entre un épaulement (9) du manchon (6) et une surface de contact (7) du couvercle (1), et en ce que la hauteur (*h*) et la matière de l'anneau compensateur (8) sont choisies en sorte qu'une différence de contrainte prévisible soit créée au chauffage dans la région de l'accouplement par frottement ou par traction (15).

3. Agencement selon la revendication 1 ou 2, caractérisé en ce que le couvercle (1) est en un matériau ferritique, le manchon (6) est en un alliage à base non ferreuse du type Ni Cr 15 Fe, et l'anneau compensateur (8) est en un matériau austénitique.

FIG.1

# FIG. 2